# EUROPEAN PATENT APPLICATION

(11) **EP 4 748 218 A1**
(43) Date of publication of application: **27.05.2026**
(21) Application number: 24214856.7
(22) Date of filing: 22.11.2024
(51) Int. Cl.: A01D 17/00, A01D 33/00, A01D 33/08, A01D 41/127, G06V 10/82

(54) **METHOD FOR CONTROLLING THE OPERATION OF A ROOT CROP HARVESTER AND CONTROL SYSTEM**

(71) Applicant: Dewulf NV, 8800 Roeselare (BE)
(72) Inventor: Van Iseghem, Joeri, 8770 Ingelmunster (BE); Algoet, Olivier, 8800 Roeselare (BE); Vanderborght, Sébastien, 8510 Marke (BE)
(74) Representative: Hostens, Veerle

(57) **Abstract**

The invention relates to a method and control system (30) for controlling the operation of a root crop harvester (1) for harvesting, comprising:
- obtaining sensor output data (15, 17) from at least one sensor (11, 23) in the harvester (1), representing at least one state parameter of the harvester (1);
- receiving the sensor output data (15, 17) in a neural network algorithm (22), and executing the algorithm (22) for generating a suggested operation action (βₜ) for adjusting at least one adjustable operating parameter of the harvester (1), in function of the received sensor output data (15, 17), based on operation actions of adjustment of the at least one adjustable operating parameter, by one or more operators in a reference root crop harvester in function of the at least one state parameter; and
- taking operation actions for adjusting the at least one operating parameter in function of the at least one state parameter.

## Description

The invention relates to a method for controlling the operation of a root crop harvester for harvesting, which root crop harvester is adjustable with at least one adjustable operating parameter, affecting the harvesting, the method comprising obtaining sensor output data from at least one sensor in the root crop harvester, representing at least one state parameter of the root crop harvester, and comprising taking operation actions for adjusting the at least one operating parameter in function of the at least one state parameter. The invention further relates to a control system for controlling the operation of a root crop harvester for harvesting, to a computer-program, to a computer-readable data carrier and to a harvester.

This application concerns harvesters for root crops such as e.g. potatoes, onions, red beets, carrots, ... Such harvesters may vary from machines which are pulled by a tractor or which are carried on a tractor to self-propelled vehicles. Such a harvester comprises a crop-digger section, which e.g. comprises one or more harvesting shares for the harvesting of root crops. Conveying means, comprising e.g. sieving units, a hedgehog, elevators, further conveyors... are provided in order to transport the root crops from the crop-digger section towards a bunker, which may be part of the harvester, or may be separate from the harvester, such as e.g. part of a truck or an external trailer, e.g. towed by a tractor or alternatively towards a big bag or a crate or a bag. Still more alternatively, the root crops may be deposited on the ground.

At harvesting of root crops, besides the root crops typically also by-products, such as haulm, clods, stones, ... are comprised in the harvested material. During transport from the crop-digger section towards the bunker, as much by-products as possible are removed, to minimize the by-products in the bunker. It is important to clean the root crops as well as possible, limiting damage to the root crops as much as possible. Given changing harvesting conditions, such as a change in soil type or soil humidity, or changes in harvest requirements for specific markets, or different crop types and crop varieties, amount and size of stones in ground, inclination of ground, ... this is no sinecure. To this end, in a harvester, the conveying means are typically adjustable by a harvester operator by taking operation actions in order to ensure that the harvester remains efficient in various operating circumstances. For example, the speed of a conveyor belt can be set and/or agitators and/or an interval between cleaning units and/or a slope of a hedgehog, ...

In an effort to help the operator adapt to these harvesting conditions more successfully, root crop harvesters are typically provided with sensors, for monitoring the state of the harvester regarding current settings, harvested material, environmental conditions, .... These sensors can e.g. include one or more optical sensors, such as image capturing units, and/or can comprise one or more pressure sensors, angle sensors, speed sensors, valve setting sensors ... By providing the operator with sensor output data obtained by these sensors, the operator is able to make more informed decisions and change one or more operating parameters, such as for example parameters for setting conveying means in the harvester, based on the data obtained by the sensors. Even though the operator of such harvesters is helped immensely by the information obtained by these sensors, it is difficult for the operator to adapt these operating parameters to the quickly varying harvesting conditions in an optimal way.

In order to obtain more data from the sensors and to aid the operator better, it is e.g. in research projects and e.g. in WO2021160607A1 proposed to use evaluation devices for automatically analysing images obtained by image capturing units and generating operating parameters of the root crop harvester based on this analysis. In theory, the operator will be able to make more informed decisions using such generated operating parameters to improve the efficiency even further. In practice, however, the computer vision systems which are proposed in this respect have a myriad of issues which make them not practically usable in real-life conditions. Most importantly, it is very difficult to ensure that the computer program for analysing the images works robustly in all kinds of operating circumstances.

An object of the present invention is to provide a method for controlling the operation of a root crop harvester for harvesting wherein this method is more practically feasible and allows for better adjustment of one or more operating parameters than current known methods for controlling the operation of a root crop harvester.

This object is firstly obtained by providing a method for controlling the operation of a root crop harvester for harvesting, which root crop harvester is adjustable with at least one adjustable operating parameter, affecting the harvesting, the method comprising obtaining sensor output data from at least one sensor in the root crop harvester, representing at least one state parameter of the root crop harvester, comprising taking operation actions for adjusting the at least one operating parameter in function of the at least one state parameter, comprising receiving the sensor output data in a neural network algorithm, provided for generating a suggested operation action for adjusting the at least one adjustable operating parameter of the root crop harvester, in function of the received sensor output data, based on operation actions of adjustment of the at least one adjustable operating parameter, by one or more operators in a reference root crop harvester in function of the at least one state parameter and further comprising executing the neural network algorithm for generating the suggested operation action.

The said neural network algorithm is based on operation actions of adjustment of the at least one adjustable operating parameter, by one or more operators in a reference root crop harvester in function of the at least one state parameter. The neural network algorithm model thus mimics the behaviour of the one or more operators of the reference root crop harvester. By using such a neural network algorithm, it is possible to control the operation of the root crop harvester in a way that is more practically feasible and also allows for better adjustment of the operating parameters than current known methods for controlling the root crop harvester.

So-called behavioural cloning is thus used for generating a suggested operation action. In practice, behavioural cloning is not often used in production in order to avoid that a system can be taken to an unsafe state, and/or because required reaction times are too short and/or because insufficient state information can be collected and/or because high quality training data (obtained from an expert) cannot easily be obtained,... With root crop harvesters however, it has been found that such system can be made workable in practice using high quality training data obtained with a said reference root crop harvester. The more high quality expertise the operator of such root crop harvester has, the better such system can work.

The reference root crop harvester, of which the operation actions are mimicked can, e.g. for training purposes for training the neural network algorithm, be the same harvester as the harvester in which the sensor output data are obtained, based on which the suggested operation action is generated. Alternatively or additionally for live application of the neural network algorithm, such reference root crop harvester can be one or more other harvesters in which the neural network algorithm was previously trained.

It is possible that a root crop harvester will both be a reference root crop harvester, wherein e.g. a first neural network algorithm is trained for generating a first suggested operating parameter 'A', and which uses an already trained second neural network algorithm, which is trained on one or more other reference root crop harvesters, for generating a second suggested operating parameter 'B'.

For the neural network algorithm, a model is used which consists of various layers of artificial neurons or artificial nodes that work together to learn and process information, similar to the neural network of a human mind.

The specific model which is used within the method according to the invention can e.g. be chosen dependent on the sensor output data.

Preferably at least one of three types of models is used, depending on the sensor output data:
- A first type of model can e.g. be used when the sensor output data comprises primitive data structures such as numbers (integers/floats), Booleans,... or more complicated data structures such as lists, collections,... Within this model, the neurons are split into various layers, such as the input/output layer and multiple 'hidden' layers which apply filters on the input data. The neurons of one layer are all fully interconnected to the neurons of the next layer. The model can be trained in a generally known way, by taking the sensor output data as input and then changing the filters automatically until the output data of the model, the suggested operation actions, are as identical as possible to the adjustments made by the one or more operators in the reference root crop harvester, this for example by minimizing the mean squared error.
- A second type of model can e.g. be used in case the sensor output data comprises images obtained by an image capturing unit as sensor. Within this second type of model it is necessary to analyse such images within the neural network algorithm, by implementing extra layers that perform image detections in order to determine the output parameters. These extra layers are preferably a convolutional neural network algorithm. A convolutional neural network algorithm takes advantage of the local spatial correlations within an image and only links the neurons of one layer to the `locally connected' neurons of the next layer, so that the neural network algorithm can work much more efficiently and requires less memory. These convolutional neural network algorithms have characteristic convolutional layers, which use multidimensional filters (e.g. 3x3, 4x4) that are convolved over the input image, so that features in the image such as edges are detected while maintaining the local correlations within an image. Some filters detect edges while others might detect colours, textures,... By linking several of these convolutional layers and using pooling layers to reduce the spatial dimensions of the image data, very complicated features can be detected efficiently by the convolutional neural network algorithm.
- A more complex third type of model can e.g. be used when the sensor output data comprises a combination of images obtained by an image capturing unit as sensor and other data structures such as mentioned for the first type of model. Then the neural network algorithm model preferably comprises a combination of both a convolutional network, and a fully interconnected network, wherein flattening layers are used to convert between the two types of networks.

Alternatively for embodiments wherein images are obtained by image capturing units, instead of using the second or third type of model, a separate method can be used for monitoring the operation of a root crop harvester, wherein the images taken by the image capturing devices are first analysed by an algorithm, preferably a neural network algorithm but alternatively another type of algorithm, to determine one or more harvest parameters, such as for example the number of root crops, the size of root crops, the amount of haulm and/or clods within the harvested material, ... These harvest parameters will then be considered as sensor output data for a simpler neural network algorithm of the first type.

Furthermore in embodiments wherein images are obtained by image capturing units, in order to ensure that the models are robust to differences in image capture circumstances, such as for different lighting conditions, the images are preferably first pre-processed with data augmentation by classic machine operations to improve for example lightning, noise and saturation. Additionally, the images could be rescaled and/or rotated and/or cropped or similarly edited. This data augmentation provides a significant improvement of the performance of the neural network algorithm.

The operating parameters which are controlled by the method are limited to the operating parameters which affect the harvesting, such as e.g. a quality of the harvesting, such as the amount of by-products in the bunker, damage to the root crops, yield, ... For example, the speed of a conveyor belt can be set and/or agitators and/or an interval between cleaning units and/or a slope of a hedgehog, ...

The at least one sensor can comprise one or more optical sensors, such as image capturing devices, and/or can comprise one or more pressure sensors, angle sensors and/or any other type of sensor such as, but not limited to, a moisture sensor, a wheel speed sensor, a tyre pressure sensor, a vehicle speed sensor, a brake pedal position sensor, a suspension articulation sensor, ...

The image capturing unit can be a regular camera or a video camera or any other type of image capturing device. Preferentially, this image capturing unit is adjustable by the operator and can pan and/or tilt and/or zoom in accordance with the preferences of the operator.

Since it can be very dark within the root crop harvester, it is necessary for image capturing units with shutter times to provide such shutter times sufficiently long so that the images are not too dark. However, the shutter times can of course not be too long, since otherwise the images will become very blurry, which would be detrimental for the performance of the neural network algorithm.

In specific embodiments, the image capturing unit comprises a depth camera or a LiDAR camera system, so that the captured images are 3D images and so that the neural network algorithm is able to more efficiently detect the harvested material.

When images are obtained as sensor output data, the obtained images are preferably taken with a specific field of view of the image capturing unit. Preferably, the method comprises determining for the obtained images a sub-area within the specific field of view, as a region of interest. In this way it is easy for the operator to choose a field of view for the image capturing unit that gives him visual information of e.g. more than just conveyor means in the cabin, such as for example when the operator wants to have a field of view wherein a conveyor is observed from an angle even though this angle is less suitable for the neural network algorithm, while due to the choice of this region of interest a sub-area of the field of view is selected that is easier to analyse for the neural network algorithm. By choosing a region of interest it is possible to purposefully neglect a zone of the field of view in which harvested material would normally not be present and would thus with high certainty not be detected. It is furthermore e.g. possible to purposefully neglect the detection of harvested material at places where such harvested material can get stuck, such as for example besides the elevators, so that the obtained sensor output data are not adversely affected by this 'stuck' harvested material.

In addition, the method further preferably comprises one or more transformations of the obtained images, such as a perspective transformation based on the region of interest, in order to increase the robustness.

This region of interest can in some embodiments be chosen by the operator or can in some embodiments be automatically tracked by a tracking algorithm. The region of interest can be any shape, but is preferably either defined by a line or defined by a polygon and more preferentially a quadrilateral such as a rectangle or a trapezium. By choosing a trapezoidal shape, for example a perspective transformation can e.g. be applied to this trapezoidal shape.

The method further preferably comprises determining said region of interest more than once. Since the image capturing unit is preferably adjustable by the operator, the field of view of the obtained images can vary depending on how the image capturing unit is adjusted. In addition, various adjustments to the operating parameters, for example the angle of a conveyor of the conveying means, also change the field of view of the obtained images widely. By allowing to determine the region of interest more than once, these various adjustments minimally affect the robustness and the performance of the neural network algorithm.

To this end, in specific embodiments, a first said sub-area is determined at a first field of view of the image capturing unit, a second said sub-area is determined at a second field of view of the image capturing unit, the method further comprises determining the specific field of view at which the obtained images are taken and determining the detection sub-area based on the determined specific field of view, said first sub-area and said second sub-area.

The neural network algorithm is preferentially executed by one or more processing units that are specialised in high performance for neural network applications, such as for example a computer circuit that includes good CPU performance, good GPU performance and high-speed memory connections. Such a processing unit preferentially also includes one or more hardware and/or software GPU accelerators.

Preferentially such a processing unit is a local processing unit which is provided in the root crop harvester.

In a training mode, for training of the neural network algorithm, the method further preferably comprises:
- obtaining the sensor output data at multiple times;
- obtaining for each of the times a current operation action of adjustment by an operator of the at least one adjustable operating parameter, in the root crop harvester; and
- receiving the obtained sensor output data and current operation actions in the neural network algorithm, which neural network algorithm is further provided:
   - for analysing the interrelation between the received sensor output data and the received current operation actions; and
   - for applying the analysed interrelation for generating the suggested operation action.

The actions of analysing the interrelation between the received sensor output data/received operation actions and applying this analysed interrelation for generating the suggested operation action define the training of the neural network algorithm for a root crop harvester, which in such case is a said reference root crop harvester.

This training can be an initial training, but can also be a re-training after a live application of the neural network algorithm as a companion mode. This re-training can be desired for various reasons, such as when in a live application, the neural network algorithm makes a crucial error, or in case the neural network algorithm needs to be recalibrated for a new operator, or when the root crop harvester is to be used with different harvesting conditions, such as another market, different geographical or climatological environments, wet/dry soil, different soil types, amount and size of stones in ground, inclination of ground, ...

Preferably, the training of the neural network algorithm is performed for a minimum predetermined training time, with a corresponding minimum of obtained training data, i.e. obtained sensor output data and obtained current operation actions. The predetermined training time is a system parameter that can preferably be adapted by the operator of the root crop harvester or can alternatively be a fixed parameter.

For verification of the neural network algorithm in a verification mode, the suggested operation action is preferably generated for each of the times wherein training data is obtained and the method further preferably comprises verifying for each of the times whether the generated suggested operation action remains within a predetermined offset percentage of the received current operation action and if for a predetermined number of the times the generated suggested operation action remains for a predetermined amount of the times (defining a minimum verification level) within the predetermined verification offset percentage, generating a verification signal.

Preferably, said times are at a specific time interval.

At obtaining the sensor output data and the current operation action, these are preferably given a timestamp such that the exact time thereof is known. After obtaining a minimum of training data, e.g in an abovementioned training mode, for each set of sensor output data and current operation action with a same timestamp, a suggested operation action is thus generated and it is verified whether the generated suggested operation action remains within a predetermined offset percentage of the received current operation action and if for a predetermined number of the times the generated suggested operation action remains within the predetermined verification offset percentage:
- if this is the case for a predetermined amount of time, a verification signal can be generated e.g. informing an operator that the neural network algorithm is ready for a live application in a root crop harvester to be used in a companion mode.
- if this is not the case, a verification signal is to be generated for continuing training, obtaining another minimum of further training data of obtained sensor output data and obtained current operation actions and again verifying whether the generated suggested operation actions remain within a predetermined offset percentage of the received current operation actions and if for a predetermined number of the times the generated suggested operation action remains within the predetermined verification offset percentage and whether this is the case for a predetermined amount of time.

This verification or validation action is useful to ensure that the neural network algorithm is trained sufficiently. The predetermined offset percentage is a system parameter that in some embodiments can be adaptable by the operator of the root crop harvester or in alternative embodiments can be a fixed parameter, such that the neural network algorithm can more easily be implemented in different harvesters. The predetermined number of time intervals is also a system parameter that can preferably be adapted by the operator of the root crop harvester or can alternatively be a fixed parameter, such that the neural network algorithm can more easily be implemented in different harvesters. This verification action preferably takes place between training of the neural network algorithm with one or more reference root crop harvesters and live application of the neural network algorithm in a root crop harvester, but can alternatively take place after live application of the neural network algorithm, as a re-verification action possibly after a new training, for example in case the operator is no longer content with the suggested operation actions. Companion mode is thus discontinued and one reverts to verification mode, typically after a new training mode. This re-verification action can be desired for various reasons, such as after a re-training action or in case the predetermined number of times and/or the predetermined offset percentage are changed.

Adjustable operating parameters in a harvester do not normally have to be updated on a very small time interval. The decision of changing an operating parameter can be made by a sudden change in sensor output data or by a slight but continuous increase or decrease. The time interval is preferably greater than or equal to 1s. By taking the time interval to be relatively lengthy, multiple images and/or multiple sets of other sensor output data can be received by the neural network algorithm in one time interval. This increases the stability of the suggested operating parameters, so that not every small change in the sensor output data results in a change in the suggested operating parameters. The time interval can be adaptable, or can be predetermined. In case the sensor output data is obtained from multiple sensors, it is preferentially possible to adapt for each sensor individually how often the sensor output data will be obtained or this is preferably predetermined for each sensor individually. Similarly, in case multiple current operation actions of adjustment by an operator are obtained, it is preferentially possible to adapt for each 'type' of operation action individually how often these actions of adjustments will be obtained or this is predetermined for each 'type' of operation action.

The at least one adjustable operating parameter is further preferably adjusted by applying the suggested operation action. More preferentially, the at least one adjustable operating parameter is adjusted by applying the suggested operation action automatically, for example by a control unit. Preferably, the at least one adjustable operating parameter is adjusted by applying the suggested operation action automatically, but only after the approval of the operator of the root crop harvester, for example after application of an approval signal. The suggested operation action can therefore e.g. be provided to the operator of the harvester, via a graphical user interface or via an audible or visual signal,... This approval can be required for each application of a suggested operation action, or can be alternatively only required to be given once until there is a withdrawal of the approval by the operator. Alternatively, the approval can be required cyclically and repetitively after a specific pre-determined time. In case the operator no longer approves of the automatic application of the suggested operation action, for example in case the adjustments are undesirable, the operator can start re-training and/or re-verification.

With several adjustable operating parameters, the operator preferably can select which operation actions are applied automatically and which operation actions require an approval signal. In such cases where an approval signal is used, each operating parameter could for example have its own approval signal or several operating parameters could have one or more common approval signals, such that for example operating parameter 'A' can have its own approval signal and such that operating parameters 'B' and 'C' have their own approval signal. Additionally in some embodiments, the operator can select one or more operating parameters for which an approval signal is used, and one or more other operating parameters for which the suggested operation action is applied automatically.

The operating parameters which are controlled by the method are limited to the operating parameters which affect the harvesting, such as a quality of the harvesting, such as the yield. For example, the speed of a conveyor belt can be set and/or agitators and/or an interval between cleaning units and/or a slope of a hedgehog, ... Since the adjustable operating parameters which are controlled by this method are limited to the operating parameters which affect (a quality of) the harvesting as described, the automatic application(s) of the suggested operation actions cannot result in situations that could pose a danger, for example, when using this harvester on public roads (where it is not harvesting). The controlling can be made secure against machine damage and possible injuries of the operator. In the worst case wherein the adjustments are completely undesired, the only negative effects will be a lower yield and/or harvesting quality.

The suggested operation action can for example be a number indicating how much the at least one operating parameter should be changed. The adjustable operating parameter is in such cases preferably only adjustable within a predetermined range. This predetermined range is in some embodiments a system parameter that can be adapted by the operator of the root crop harvester or can in alternative embodiments be a fixed parameter, such that the neural network algorithm can more easily be implemented in different harvesters. Such predetermined range is useful to implement a specific range for an adjustable operating parameter wherein that adjustable operating parameter is safe to be adjusted, such as for example a limitation on the speed of the conveyor belts. With this predetermined range, it can e.g. be ensured that the root crop harvester will be secure against machine damage and possible injuries of the operator.

The operating parameters can however also e.g. include machine special event parameters which are relevant when there is e.g. a blockage within the root crop harvester that affects the harvesting, such as e.g. a quality of the harvesting. Machine special event parameters can include operating parameters which are responsible for stopping certain modules within the root crop harvester, reversing one or more conveyor belts, reversing a counter roll (roll at the top of a hedgehog unit which prevents loss of product), or even stopping the harvester itself... Also such machine special events are normally secure against machine damage and possible injuries of the operator. The neural network algorithm is preferably provided for generating a suggested machine special event parameter as a special embodiment of a suggested operation action.

The method furthermore preferably comprises detecting abnormal deviations in the sensor output data and preventing the detected abnormal deviations being used in generating the suggested operation action.

Those abnormal deviations can be sensor output data which is outside pre-defined ranges, or which does not match the sensor output data from other sensors. Abnormal deviations can for example also be detected during training, for example in case the sensor output data changes substantially while the operator does not make any operation actions which would influence the sensor output data.

The neural network algorithm can be provided for generating suggested operation actions for a single adjustable operating parameter or can be provided for generating suggested operation actions for several adjustable operating parameters. Several neural network algorithms can similarly be provided for generating suggested operation actions for one or more other adjustable operating parameters. It is possible to provide one or more neural network algorithms per adjustable operating parameter.

The said neural network algorithm of a method according to the invention is further preferably provided for generating a suggested operation action for the operation of the root crop harvester for a first harvesting condition, whereby one or more additional neural network algorithms are preferably similarly provided for similarly generating a suggested operation action for the operation of the root crop harvester for one or more corresponding additional harvesting conditions, differing from the first harvesting condition. The method then further preferably comprises obtaining a said harvesting condition and comprises executing the neural network algorithm corresponding with the determined harvesting condition for generating the suggested operation condition corresponding with the determined harvesting condition.

The harvesting condition can e.g. be the sales market of the root crops to be harvested, such as whether the root crops are to be sold fresh, or are provided for preservation or are provided for further processing in a factory, ....

The harvesting condition can furthermore e.g. reflect the difference between 'wet' and 'dry' soil, and/or can reflect different soil types and/or different climatological and/or geographical environments, changes in harvest requirements for specific markets, different crop types and crop varieties, amount and size of stones in ground, inclination of ground and/or lighting conditions in which harvesting can take place, such as a difference between day or night, or cloudy or foggy, etc. which will cause images taken with image capturing units (possibly switching to nightview, infrared, black and white, ...) to vary,... although it is even more preferential to train the neural network algorithm in order to have sufficient robustness in such said circumstances. The operator could also be considered as a specific harvesting condition, since each operator has slightly different preferences.

It can be provided that the harvesting condition is manually submitted by an operator in order to obtain the harvesting condition. Alternatively or additionally, the harvesting condition can be automatically detected by a detection algorithm using images from the image capturing unit and/or one or more sensors, such as e.g. a humidity sensor, a pressure sensor, .... Alternatively or additionally the neural network algorithm can detect the harvesting condition.

The neural network algorithm can more specifically comprise multiple sub-algorithms for the different harvesting conditions. Alternatively, respective neural network algorithms for each of the different harvesting conditions may be used.

The object of the invention is further obtained by a control system for controlling the operation of a root crop harvester for harvesting, wherein the control system comprises means for carrying out the method as discussed above. This control system preferably further comprises means for training and/or validating the neural network algorithm as discussed above.

The means for carrying out the method preferably comprise an image capturing unit as a said sensor. Such image capturing unit can e.g. be provided for taking images of harvested material (root crops and/or one or more by-products, such as e.g. haulm, clods, stones,...) , conveyed on conveying means in the root crop harvester as the sensor output data. Alternatively or additionally, such image capturing unit can e.g. be provided to detect the position of a piston and/or the inclination of conveying means, etc.

The control system preferably comprises one or more local control units on the root crop harvester for executing the neural network algorithm. In addition, the control system preferably comprises one or more network connections which allow access to services, data storage and/or applications via the internet or any other type of network such as for example a local area network. By utilising these one or more local control units, it is possible to use this control system in circumstances where there is no good network connection e.g. in areas with bad internet connection, and thus ensures that the control system is more robust. Additionally, the one or more local control units are preferably adapted for use within a root crop harvesters, for example that they are temperature resistant and/or vibration resistant and/or water resistant and/or dust resistant. A network connection allows for an operator to download and/or upload one or more of the one or more neural network algorithms to and/or from the one or more local control units.

The means for carrying out the method preferably further comprise several sensors in the root crop harvester for obtaining corresponding sensor output data, and comprise a user interface for selecting at least one of the several sensors for obtaining sensor output data for receiving in the neural network algorithm. This user interface can comprise a graphical user interface, presented on for example a monitor, and/or can comprise visual/audible signals, ... The user interface can further comprise a touch-screen and/or a keyboard and/or can be voice activated, ...

The control system preferably further comprises one or more data banks, which can store the data within the control system such as the sensor output data and/or the current operation actions and/or settings of the graphical user interface, ... The network connection allows for an operator to download and/or upload this data to and/or from the one or more data banks. The data which is stored in such a data bank can be retrieved later, for example for the training and/or verification of the neural network algorithm. This allows for delayed training and/or delayed verification, which can be very useful in specific situations. These data banks can comprise any type of means for storing data, e.g. flash drives, Sd cards, hard drives, ... The data banks can be directly integrated within the user interface and/or one or more local control units.

In case the neural network algorithm is provided for analysing the interrelation between the received sensor output data and the received operation actions and for applying the analysed interrelation for generating the suggested operation action, the means for carrying out the method preferably additionally comprise several action determining means for obtaining the corresponding current operation actions and the user interface is preferably provided for selecting at least one of the action determining means for obtaining the current operation action for receiving in the neural network algorithm. The action determining means can be linked to the user interface as discussed above, but can also be e.g. separate levers or separate buttons or can be one or more sensors for automatically determining the current operation actions.

In addition, the object of the invention is obtained by a computer program, comprising instructions, which, when the computer program is executed on a control system as discussed above causes the control system to carry out the method as discussed above.

Furthermore, the object of the invention is obtained by a computer-readable data carrier having stored there on the computer program as discussed above.

Lastly, the object of the invention is obtained by a harvester comprising a control system as discussed above.

This harvester preferably comprises a first image capturing unit and in addition preferably additional image capturing units. The harvester furthermore preferably comprises at least one sensor which generates sensor output data. The harvester preferably comprises CAN-bus connections and/or Ethernet connections between its different components. The control system and the one or more local control units, if present, are preferably adapted to be connectable to the CAN-bus connections and/or the Ethernet connections to transmit/obtain the images and/or the sensor output data and/or the operating parameters.

The present invention will now be explained in more detail by means of the following detailed description of methods for controlling the operation of a root crop harvester, corresponding control systems, computer programs, computer-readable data and harvesters according to the present invention. The sole aim of this description is to give explanatory examples and to indicate further advantages and particulars of the present invention, and can thus by no means be interpreted as a limitation of the area of application of the invention or of the patent rights defined in the claims.

In this detailed description, reference numerals are used to refer to the attached drawings, in which in:
- Fig. 1 schematically illustrates a possible embodiment of a control system according to the invention, implemented in a root crop harvester;
- Fig. 2 schematically illustrates a neural network algorithm used in a control system according to the invention;
- Fig. 3 schematically illustrates a possible method for controlling a root crop harvester according to the invention;
- Fig. 4 schematically illustrates a verification step for evaluation of a neural network algorithm of a control system according to the invention;
- Fig. 5 schematically illustrates a possible control system according to the invention.

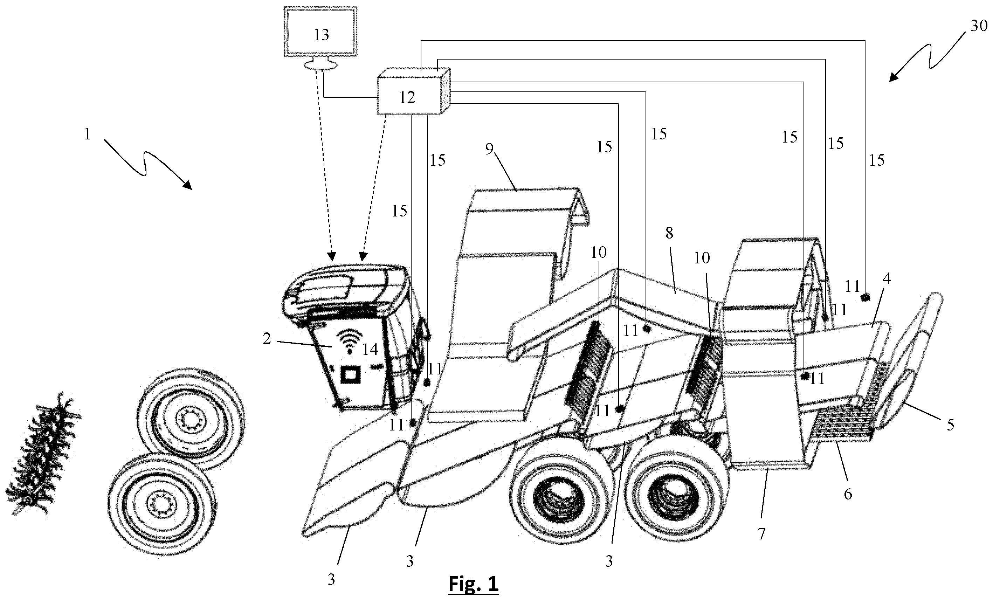

Figure 1 schematically illustrates a possible embodiment of a control system (30) according to the invention, implemented in a root crop harvester (1). Such a root crop harvester (1) comprises a crop-digger section with e.g. one or more harvesting shares, which are not illustrated. A sieving unit comprises sieving conveyors (3), haulm hooks (10), a feeding conveyor (4), a hedgehog (5) and axial rollers (6). This sieving unit is positioned downstream of the harvesting shares for transporting root crops towards the ring elevator (7) and in the meantime, to sieve dirt from the harvested root crops. With the elevator (7), the root crops are then lifted towards a discharge conveyor (8) onto a transfer elevator (9). The feeding conveyor (4) preferably does not have a sieve function when passing through the ring elevator (7).

Other configurations are of course conceivable wherein e.g. the root crop harvester (1) is provided with a bunker and/or without axial rollers (6) and/or with haulm rollers and/or without hedgehog (5) and/or with the ring elevator (7) being positioned fully at the back of the root crop harvester (1) and/or without such ring elevator (7), and/or with additional or less conveyors (3, 4, 8, 9) and/or other transfer means etc.

The parts of the root crop harvester (1) can be of any known design.

The in figure 1 illustrated harvester (1) is a potato harvester. The invention is however equally applicable to other type of root crop harvesters, such as e.g. harvesters (1) for harvesting onions or red beets or carrots, etc... A carrot harvester can e.g. be provided with neural network algorithms for similar settings as a potato harvester but it can also have neural network algorithms for different settings, such as a neural network algorithm for setting the harvesting depth depending on e.g. the height of the haulm to be cut off and/or for adjusting the cleaning intensity depending on the number of roots that are excessively cut off by the cleaning brushes, ...

The root crop harvester (1) is now according to the invention provided to use artificial intelligence for controlling the operation of the root crop harvester (1). In this respect the root crop harvester (1) is provided to be able to use behavioural cloning. The operator's behaviour is learned and mimicked, based on saved sensor output data (15, 17) along with current operation actions (αₜ).

The sensor output data (15, 17) represents at least one state parameter (st) of the harvester (1). Using sensors (11, 23), the state information about the harvester (1) can be captured as completely as possible, and communicated via a data connection such as e.g. a CAN-bus connection and/or an Ethernet connection to the control system (30). Sensors (11, 23) can e.g. comprise one or more optical sensors, such as image capturing units (11), and/or can comprise one or more pressure sensors, angle sensors, speed sensors, valve setting sensors, ...

The image capturing units (11) can e.g. be provided for capturing images (15) of harvested material and/or can be provided to detect the position of a piston and/or the inclination of conveying means, ...

With the operation actions (αₜ), at least one adjustable operating parameter of the harvester (1) is adjusted, typically adjusting a corresponding actuator, e.g. making a corresponding motor turn faster or slower or extending or retracting one or more corresponding pistons, etc. this e.g. for adjusting:
- the speed of conveying means (3, 4, 6, 7, 8, 9);
- agitators;
- an interval between sieving conveyors (3);
- a slope of a hedgehog (5);
- adjusting of the spindles;
- drop height;
- adjust differential bypasses of e.g. a so-called flexyclean;
- intensity, angle, position, pressure and/or speed of a haulm roller and in case of a blockage change direction of rotation thereof;
- adjustment of axial rollers;
- opening adjustment, angle, rotational direction and/or position of a cleaning unit;
- fan blower control and intensity;
- haulm topper intensity, speed and positioning;
- height of crop digging section.

In figure 1, the harvester (1) is provided with different cameras (11) as image capturing units:
- 2 cameras (11) are positioned above the first sieving conveyor (3);
- 2 cameras (11) are positioned above the third sieving conveyor (3);
- 2 cameras (11) are positioned above the feeding conveyor (4);
- 1 camera (11) is positioned above the hedgehog (5).

A camera (11) can also be positioned above the reading table (not illustrated).

Preferably at least 1 camera (11) is provided per said module (3, 4, 5). 2 cameras (11) can be placed above a said module (3, 4, 5) e.g. to provide an operator with a more pleasant view. If desired, even more cameras (11) could be provided per module (3, 4, 5). Alternatively, it is also possible to provide 1 camera (11) for several conveyors (3, 4, 5) next to each other. Such conveyors (3, 4, 5) are then preferably driven at a same speed. It is however also possible to split analysis of the obtained images (15) for conveyors (3, 4, 5) which are set up next to each other but which are running at different speeds. E.g. conveyors which fill an elevator evenly can be controlled separately.

With fewer cameras (11) related costs will be reduced. With multiple cameras (11) complexity of analysis of corresponding images (15) increases.

In fact, the harvester (1) can be provided with as many cameras (11) as desired. In practice, preferably e.g. 8 to 18 cameras (11) can be implemented standardly and a customer could request more cameras (11) as an option. Not all cameras (11) will then necessarily be used for controlling the at least one adjustable operating parameters, some might only be present to provide an operator with a desired view, e.g. for driving, such as a reverse camera or a haulm topper camera, etc.

Where a camera (11) is provided, the location thereof is preferably as central as possible on the respective module (3, 4, 5) above which it is placed.

The control system (30) is preferably provided so that it can be set how many cameras (11) are present so that the neural network algorithm (22) will process images (15) taking this setting into account. The control system (30) can be provided automatically to detect which cameras (11) are present and/or an operator could set which cameras (11) are to be taken into account using e.g. a user interface (13). It can then preferably be set which camera (11) is present at which position in the harvester (1), this preferably per module (3, 4, 5) and possibly also within said module (3, 4, 5).

The one or more cameras (11) could be supplemented with other image capturing units (11). In addition to the one or more image capturing units (11), the harvester (1) is preferably provided with additional sensors (23), such as one or more pressure sensors and/or one or more angle sensors and/or one or more speed sensors and/or one or more valve setting sensors, ... Thus, preferably a pressure sensor is provided on the first sieving conveyor (3). The filling of the ring elevator (7) could also be monitored using an image capturing unit or a pressure sensor. Speed sensors for monitoring the speed of the conveyors could further be provided. It is also e.g. possible to provide a moisture sensor.

In alternative embodiments of control systems according to the invention, it is also possible to avoid the use of cameras as sensors for providing the sensor output data (15, 17) for feeding the neural network algorithm (22), but to instead only use one or more other optical sensors and/or one or more pressure sensors and/or one or more angle sensors and/or one or more speed sensors and/or one or more valve setting sensors, ...

Furthermore as shown in figure 1, the control system (30) within the harvester (1) is further preferably provided with a user interface (13) within the cabin (2) which allows the operator to make settings and/or on which obtained images (15) or other sensor output data (17) can be shown to the operator and/or on which a generated suggested operation action (βₜ) can be presented to the operator, etc. Preferably, the control system (30) within the harvester (1) comprises one or more such user interfaces (13). Such user interfaces (13) can e.g. comprise a monitor and/or a touch-screen and/or a keyboard and/or a dial and/or voice activation, etc. Such user interfaces (13) can be provided in the cabin (2) of the harvester (1), but could also comprise mobile devices and/or remote devices.

The control system (30) illustrated in figure 1 is further provided with a network connection (14) which allows access to services, data storage and/or applications e.g. for obtaining settings via the internet. In certain embodiments of control systems (30) according to the invention, there could also be no network connection (14) or multiple network connections (14) present within the control system (30).

The control system (30) is further provided with one or more data banks which can store the data within the control system (30) such as the sensor output data (15,17) and/or the current operation actions (αₜ) and/or settings with a user interface (13). These data banks can comprise any type of means for storing data, e.g. flash drives, Sd cards, hard drives, ...

The one or more user interfaces (13) and/or the one or more network connections (14) and/or the one or more data banks are preferably adapted to be connectable to a data connection within the control system (30) such as a CAN-bus connection and/or an Ethernet connection.

The control system (30) shown in figure 1 further comprises a local control unit (12) for executing the one or more neural network algorithms (22). Preferably, the control system (30) comprises one or more such local control units (12), also known as a so-called edge device. The one or more local control units (12) are preferably adapted to be connectable to a data connection within the control system (30) such as a CAN-bus connection and/or an Ethernet connection. Each local control unit (12) is preferably specialised in high performance for neural network applications, and preferably comprises a processing unit which contains a computer circuit that includes good CPU performance, good GPU performance and high-speed memory connections. Such a processing unit preferentially also includes one or more hardware and/or software GPU accelerators. In specific embodiments, such a processing unit can be integrated within an image capturing unit (11). Preferentially such a processing unit is a local processing unit which is provided within the root crop harvester (1).

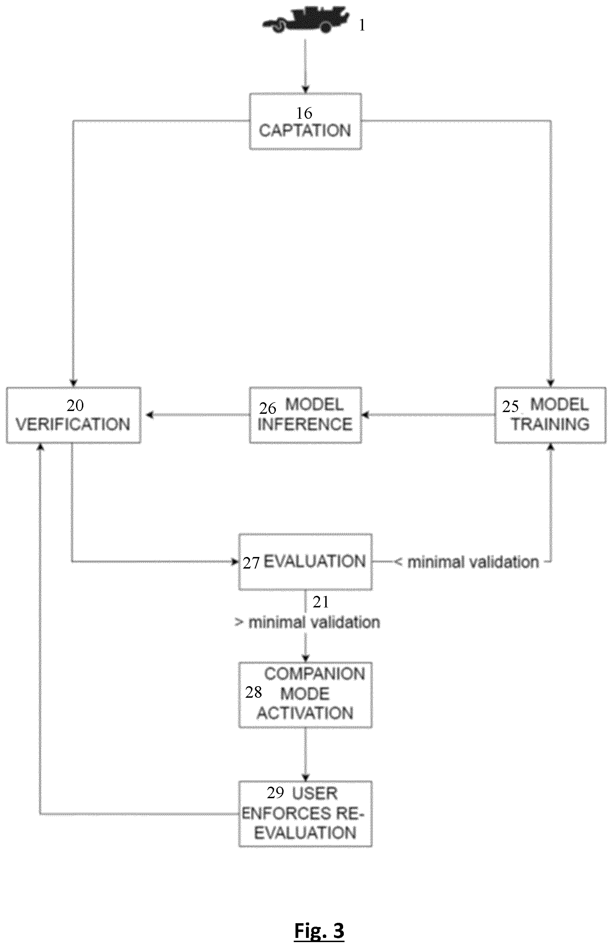

Figure 3 illustrates a specific embodiment of the method according to the invention and shows the various possible phases thereof.

First, within a captation phase (16), sensor output data (15, 17) and current operation actions (αₜ) are collected within the root crop harvester (1). During several weeks / months / years, sensor output data (15, 17) and current operation actions (αₜ) are collected within the harvester (1). Thereafter, using these collected data, a self-learning neural network algorithm (22) can be trained in a training phase (25) to model the operators behaviour, such that the neural network algorithm (22) can be used to unburden the operator from his most menial tasks allowing him to focus on more important tasks.

For this purpose, the sensor output data (15,17) and/or current operation actions (αₜ), captured during the captation phase (16), can be sent via a data connection within the control system (30), e.g. a CAN-bus and/or an Ethernet connection, towards one or more local control units (12) and can be stored in the one or more data banks, so that for example they can be retrieved later for the purpose of training (25) or verification (20).

The sensor output data (15,17) of the one or more sensors (23) are preferably captured at a configurable time interval and are preferably given a timestamp such that the exact time of the sensor output data (15,17) is known. The time interval can be adaptable, or can be predetermined. In case the sensor output data (15,17) is obtained from multiple sensors (23), it is preferentially possible to adapt for each sensor (23) individually how often the sensor output data (15,17) will be obtained or this is preferably predetermined for each sensor (23) individually. Similarly, in case multiple current operation actions (αₜ) of adjustment by an operator are obtained, it is preferentially possible to adapt for each 'type' of operation action individually how often these actions of adjustments will be obtained or this is predetermined for each 'type' of operation action.

If one or more image capturing units (11) are present, in the captation phase (16) images (15) are captured at a preferably configurable time interval (e.g. each second) and are preferably given a timestamp such that the exact time of the image (15) is known. The images (15) are most preferably captured at a rate of +/- 2 image (15) captures per second. A rate of 2 images (15) per second gives a good balance between the information given to the neural network algorithm (22) while not overloading the one or more local control units (12).

The timestamp is very useful when the sensor output data (15,17) and/or current operation actions (αₜ) are stored in the one or more data banks. The settings of the data captation phase (16) within the control system (30) can preferably be configurable via a configuration script and/or by an operator via a user interface (13).

An example of such a configuration script can be seen below, this for e.g. a camera which is positioned above the hedgehog (5):

```
 "hedgehog": {
       "local seconds": 10,
       "memory": 10000,
       "cloud_seconds": 50,
       "cloud": true,
       "persistent_storage": true,
       }
```

Within this example of a configuration script, 'local_seconds' depicts the time interval between moments where the data is stored locally within a data bank, while 'cloud_seconds' represents the time interval between moments wherein the data is uploaded to a network via a network connection (14). 'Memory' indicates the maximum amount of data storage space which the data bank can contain.

The current operation actions (αₜ), which change the operating parameters, are captured in a similar way: for this purpose, the control system (30) is preferably further provided with one or more action determining means (24) for obtaining the current operation actions (αₜ). These action determining means (24) can be linked to the user interface (13) but can also comprise e.g. separate levers or separate buttons and/or one or more sensors (23) for automatically determining the current operation actions (αₜ).

For the current operation actions (αₜ), it is necessary to transform the input by the operator into transformed data, which can be used by the actuators performing the operation actions. This transformation is software-dependent and can thus suddenly change, for example when there are system updates. For this reason, it is not the user input data which is sent to the one or more local control units (12) or the one or more data banks, but only the transformed data.

When there are multiple image capturing units (11) within a specific module of the harvester (1) which are capturing the same area within this module, the images (15) of the multiple images (15) could in some embodiments all be further used during training/verification (25, 20). In other embodiments, the images (15) of only one or some of the image capturing units (11) are further used during training/verification (25, 20) while the other image(s) (15) are merely shown to the operator on the user interface (13).

The images (15) taken by the image capturing units (11) can be taken with different shutter times. Such a shutter time, also known as the exposure time, is the length of time that the image capturing unit (11) is exposed to light while capturing an image (15). This shutter time can preferably be configured by the operator and/or could be automatically determined based on the brightness conditions within the module, e.g. via a light sensor. Having a slower shutter time makes the images (15) more vague while displaying them, but increases the robustness of the images (15) in various brightness conditions. In specific embodiments, it is also possible that the one or more image capturing units (11) cycle between different shutter times. For example, an image capturing unit (11) could capture 2 images (15) per second with low exposure times and 2 images (15) per second with high exposure times, so that the images (15) with low exposure times can be used for the neural network algorithm (22) and the other images (15) can be used for the user interface (13).

After the captation phase (16), the next phase of the method shown in figure 3 is the training phase (25), where the neural network algorithm (22) is generated.

Due to a configuration approach, any neural network algorithm (22) can be generated with any number of image capturing units (11) and any amount of other sensors (23). The number of filters and layers of the neural network algorithm (22) are based on the amount of input images (15) and the amount of other sensor output data (17).

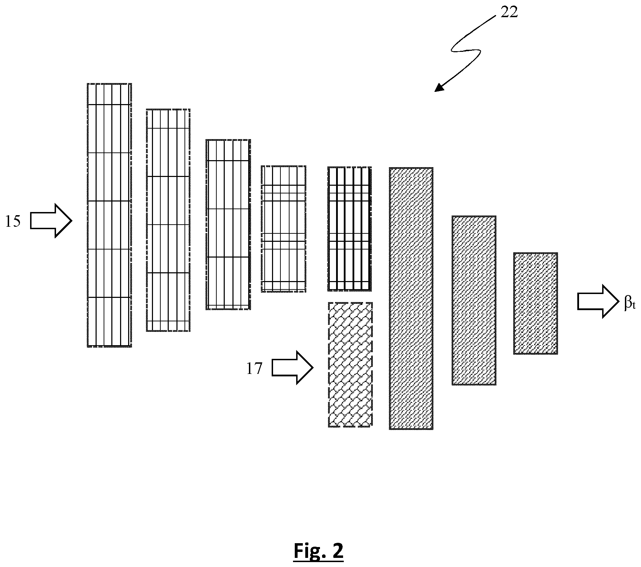

An example of a neural network algorithm (22) according to the invention is shown in figure 2, here more specifically with 8 layers. The neural network algorithm (22) works as described below.

The images (15) are merged and inputted through a convolutional model wherein the image (15) features are detected. This convolutional model is a CNN network architecture in which we find a mix of convolutional, pooling and flattening layers. Convolutional layers detail specific detections such as edges, colour differences etc. For the present case, most of the image (15) remains static through time, which means that looking at the hedgehog (5), only a small portion is moving. The pooling layers perform dimensionality reduction while lastly the flattening layer makes sure that it is easy to add the other sensor output data (17) to the model.

Next, the other sensor output data (17) are concatenated and merged with the output of the convolutional model, where they are inputted through a fully interconnected network comprising multiple filters and layers. After X fully connected layers in combination with their corresponding activation functions (e.g. a sigmoid or SoftMax function) an output is retrieved, which represents the suggested operation action (βₜ).

The actual training (25) of the neural network algorithm (22), the modification of the filters/weights, is e.g. done using an end to end machine learning platform which provides packages to build deep neural networks.

Using data augmentation it is possible to adjust the images (15) to have better training (25). To this end, e.g. lighting conditions of the images (15) can be altered to have better training (25) for different lighting conditions. It is e.g. possible to switch to nightview, infrared, black and white, ... Furthermore images (15) can e.g. be altered by flipping, mirroring or rotating the images (15), and thus creating more data points and increasing the robustness. The training (25) itself is done by comparing the output suggested operation actions (βₜ) with the current operation actions (αₜ) and amending the filters/weights until the difference between the current operation actions (αₜ) and the suggested operation actions (βₜ) is as small as possible. This so-called training loss is often compared by using e.g. the mean squared error, but other mathematical methods are of course also possible.

When neural network algorithms (22) are downloaded/uploaded for use in control system (30) of a harvester (1), it is only possible to use models with the same configuration (same amount of image capturing units (11) and sensors (23) and thus filters and layers).

The settings of the training phase (25) within the control system (30) can preferably be configurable via a configuration script and/or by an operator via a user interface (13). An example of such a configuration script can be seen below for e.g. a camera which is positioned above a sieving conveyor (3):

```
 "companion mode": {
       "secondweb_algorithm": {
       " image_tracks" : [" secondwebL" , "secondwebR"],
       "sensor_list":["drive_speed","firstweb_pressure"],
       "action_list": [{"action":"secondweb_speed",
                 "activated": true,
                 "minimal_validation" : 80,
                 "offset_validation": 2,
                 "training_hours": 72},
                 {"action":"secondweb_agitators",
                 "activated": true,
                 "minimal_validation":70,
                 "offset_validation": 3,
                 "training_hours": 24}],
       "image_size":208,
       "batch_size":8,
       "minimal_hours_data": 96
       }
       1
```

Within this example of a configuration script, the input of the neural network algorithm (22) is described first: the images (15) resulting from the image capturing units (11) "secondwebL" and "secondwebR". In addition, the other sensor output data (17) resulting from the sensors (23) "drive_speed" and "firstweb_pressure" are also delivered into the neural network algorithm (22).

Furthermore, the action list lists the current operation actions (αₜ) which the companion mode (28) will output. These are the actions as performed by the operator. The operator will be able to turn on/off automatic adjustments for the values in the action_list by activating the Boolean (0/1). The other variables either help to set up the model or are used in the further step of verification (20).

Depending on the "knowledge" of the operator of one or more reference root crop harvesters from which the sensor output data (15, 17) and current operation actions (αₜ) are collected, the training data will be good, medium or bad. Ideally, all the bad training data is filtered out since this is noise. Bad data can be filtered out by imposing basic rules to the dataset. Important to note is that these rules heavily depend on the use case of the potatoes. For example: is the produce for fresh market, is the quality of the harvested material very important? Then the training data for the periods wherein the harvested material was of worse quality will be filtered out.

As shown in figure 3, the next phase in the model is the verification phase (20). In this phase, it is further evaluated whether the result of the verification (20) is good enough to commence the activation of the companion mode (28).

In the verification phase (20), the trained neural network algorithm (22) is no longer amended based on the current driving actions, but is tested against the current operation actions (αₜ). Even though the verification time only comprises a small part of the total time required to train the neural network algorithm (22), it is very significant since the algorithm (22) can no longer train itself during the verification (20), so that the neural network algorithm (22) is thoroughly tested against the different actions of the operator of the harvester (1). During each evaluation step (27), the suggested operation action (βₜ) needs to remain within a predetermined offset percentage (γ) of the received current operation action (αₜ). This offset percentage (γ) can allow some small deviation between the suggested operation action (βₜ) and the received current operation action (αₜ). The offset percentage (γ) can for some operation actions be 0, so that it is evaluated whether the suggested operation action (βₜ) is equal to the received current operation action (αₜ). This evaluation step (27) is repeated for a specific number of times. If for a predetermined percentage of times, the evaluation step (27) is successful, a verification signal (21) is generated, such as a popup on the user interface (13) or an audible signal, etc., which indicates that the model is ready to be used for controlling the operation of a root crop harvester (1) for harvesting. When the predetermined number of times is e.g. chosen as 70%, then when more than 70% of the times the suggested operation action (βₜ) sufficiently corresponds with the received current operation action (αₜ) such verification signal (21) will be generated. In some situations it is additionally possible that the verification signal (21) is only generated in case a second predetermined percentage of times is not exceeded. A range can thus be set within which the amount times within which the suggested operation action (βₜ) sufficiently corresponds with the received current operation action (αₜ) should remain. E.g. when the amount of times approaches 100%, then this is probably because the operator does not adjust the corresponding setting and the algorithm mimics this. By setting such second predetermined percentage of times, it can be avoided that such behaviour is mimicked. The predetermined offset percentage (γ) and both said predetermined number of times are system parameters that in some embodiments can be adaptable by the operator of the root crop harvester (1) or in alternative embodiments can be a fixed parameter, such that the neural network algorithm (22) can more easily be implemented in different harvesters (1). Each adjustable operating parameter could have its own predetermined percentage and/or amount of times, to really fine-tune the neural network algorithm (22) for each separate adjustable operating parameter.

Extra sensor output data (17) and images (15) generated during verification (20) can be stored in the data banks and/or communicated via the network connection (14).

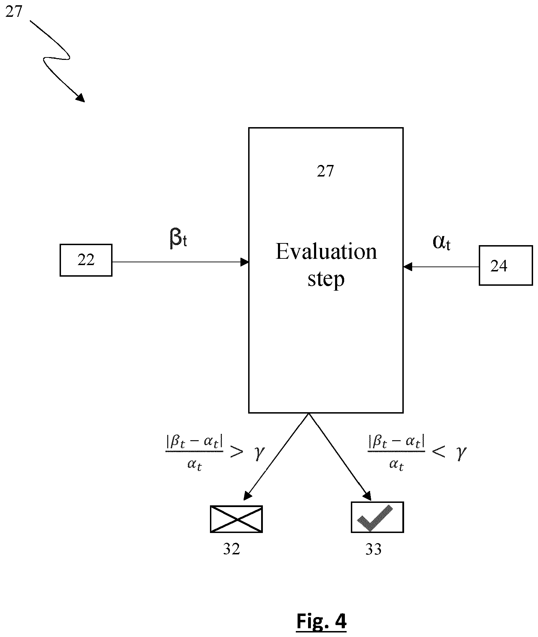

The following pseudocode gives an idea of how a verification algorithm for verification (20) can work. Before running this script, a time window is set in the configuration indicating for how long the verification algorithm will run and how many evaluation steps there are. In the example below, the verification algorithm can run indefinitely and will have an hourly evaluation step. In each evaluation step, as shown in figure 4, the current operation actions (αₜ), obtained from the neural network algorithm (22), are compared to the suggested operation actions (βₜ), obtained from the action determining means (24). If the relative difference is smaller than the offset percentage (γ), it is counted as a good prediction (33). Otherwise it is counted as a bad prediction (32).

```
 Output = {"action": 'hedgehog_angle', "timestamps": ["2024-05-27 10:27:12",
 "2024-05-27 10:28:12", "2024-05-27 10:29:12"], "predctions": [10, 15, 20], "actuals":
 [10, 17, 50]}
 validated = False
```

while not validated:

```
  start_date = datetime.now() - validation_days
  [timestamp > start_date for timestamp in output["timestamp"]]
  predictions = output["prediction"] [timestamp]
  actuals = output[" actual"] [timestamp]
  good = 0
  bad=0
  for i in range(len(predictions)):
     if abs((predictions[i] - actuals[i]))/actuals[i] < validation_offset:
       good+=1
     else:
       bad+=1
  validation_metric = good/(bad+good)
  if validation_metric > minimal_validation:
     validated = True
  else:
       time.sleep(1 hour)
```

As illustrated in figure 3, after the evaluation phase (27) the companion mode (28) is activated. In companion mode (28), the suggested operation actions (βₜ) are generated by using the neural network algorithm (22). The at least one adjustable operating parameter can then be adjusted by applying these suggested operation actions (βₜ). This can be done either applying this suggested operation action (βₜ) manually, automatically, by using for example a control unit, or automatically after the operator gives an approval signal. This approval signal can be required for each action, or can be required once until it is retracted or can be required periodically, ... All these possibilities can also be intermixed for different adjustable operating parameters. An operator can thus e.g. choose to use companion mode (28) for controlling the setting of the angle of the hedgehog (5), this using a first trained neural network algorithm (22), while controlling the speed of a sieving conveyor (3) manually, collecting data for training or re-training a second neural network algorithm (22).

In order to ensure a specific amount of quality assurance, in certain embodiments these adjustable operating parameters are only adjustable within a specific predetermined range, wherein they are safe to be adjusted. Optionally, the operator can be able to change these ranges.

Furthermore certain actions are defined to capture machine special events, which are a specific category of operating parameters, which the neural network algorithm (22) cannot adjust but can only detect, such as:
- stopping the harvester (1) abruptly;
- reversing the counter roll (roll at the top of the hedgehog (5) - this prevents loss of harvested material);
- reversing conveyors; ...

This results in a data captation (16) of blockages from which a blockage detection system can be learned during training (25). Detecting a blockage can also be seen as a special adjustable operating parameter with a corresponding suggested operation action (βₜ). Such suggested operation action (βₜ) does not always adjust a setting in the harvester (1) but can e.g. also notify the operator for upcoming problems/blockages.

The final step in figure 3 is when the user/operator enforces re-evaluation (29). This causes a re-verification (20). There are two different scenarios whereby a reverification (20) is triggered.
1) Manual action by the user. When the user issues a manual action, a cool down is triggered of e.g. two hours wherein the neural network algorithm (22) is disabled and the operator takes over the full control of the harvester (1). The algorithm is then trained during these two hours, this taking the data (15, 17, αₜ) into account used for the previous training together with newly collected data (15, 17, αₜ) corresponding with the manual actions of the user during these hours, and after the two hours a new verification action (20) is done.
2) The user can also turn off the companion mode (28) and therefore force the algorithm to start a reverification (20).

Such re-verification (20) can be useful in cases where a harvester (1) is used in new harvesting conditions (31), such as new soil types, other operators, other climatological environments... but is of course also useful in case there is an issue with the suggested operation actions (βₜ).

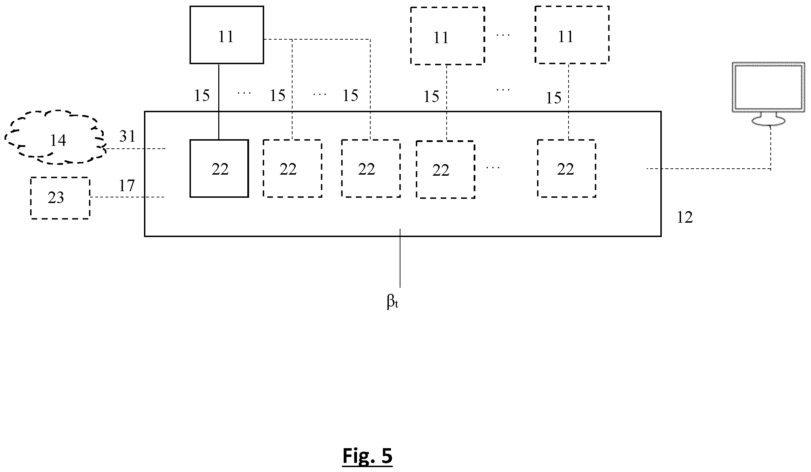

In other embodiments, it is also possible that there is not just one neural network algorithm (22), but that there are multiple neural network algorithms (22), such as is shown in figure 5. It is for example possible that each module of the harvester (1) has its own neural network algorithm (22) e.g. that hedgehog (5) and/or the sieving conveyors (3) and/or the discharge conveyor (8) and/or the feeding conveyor (4) and/or the ring elevator (7) each have their own neural network algorithms (22), or even that each adjustable operating parameter has its own neural network algorithm (22) ... This makes the control system (30) very modular and adjustable. The control system (30) can in some embodiments be modularly provided. It is e.g. possible to provide a first module for controlling of the hedgehog, a second module for controlling of a said sieving conveyor, a third module for controlling of the haulm roller, a fourth module for controlling the reading table, etc. Each of these modules can then be separately purchasable. Each of these modules can then be supplemental.

When multiple neural network algorithms (22) are used, the operation actions are divided among the algorithms (22), but the sensor output data (15,17) might be relevant for multiple adjustable operating parameters and thus for multiple neural networks (22). It is also possible that the current operation actions (αₜ) of one module are used as an input for another module. For these reasons, the sensor output data (15,17) and/or the current operation actions (αₜ) can be stored in one of the data banks which acts as a 'dictionary' so that it can be read by the other neural network algorithms (22). For example: the images (15) taken by a camera (11) near the discharge conveyor (8) could be used as input for the hedgehog (5), so that when the potatoes are too dirty near the discharge conveyor (8), the hedgehog (5) slope can be adapted.

In addition to having several neural network algorithms (22) for several corresponding modules of the harvester (1), it is also possible to have several neural network algorithms (22) for the entire control system (30), so that a selection can be made between the several neural network algorithms (22) during operation. Furthermore the control system (30) can e.g. be provided for detecting whether a camera (11) or an additional sensor (23) is defective or a cable is broken, such that in case this affects companion mode (28) for a respective module (3, 4, 5) in the harvester (1), the operator can decide whether he wishes to continue in companion mode (28) or wishes to proceed manually for some modules (3, 4, 5).

Another aspect of this invention lies with improving operators who have none or no real experience for harvesting root vegetables or want to be unburdened. A neural network algorithm (22) trained according to the invention can be copied from a reference root crop harvester (1) to another root crop harvester (1). Therefore, it can be possible to download/upload algorithms (22) using the network connection (14). So neural network algorithms (22) can be made available for other harvesters (1). Algorithms (22) can thus also be pre-installed on the harvester (1).

The algorithms (22) can be stored in an azure bucket and can be retrieved by performing API calls. This approach is called offline model deployment. In this setting, the user could download the current best algorithm (22) for his use case via a network connection (14).

Updates concerning the current neural network algorithms (22) could be made available through an update procedure. For example: two of such update methods could be:
- force update: Update is forced;
- requested update: Update is notified to the operator, who can choose whether to update to the latest model or not.

Another reason for changing the neural network algorithm (22) can be a change in harvesting conditions (31). The harvesting conditions (31) could for example be different markets, different geographical or climatological environments, wet/dry soil, different soil types, amount and size of stones in ground, inclination of ground... For different harvesting conditions (31) it can be possible to download multiple neural network algorithms (22) as described earlier, or simply to train multiple neural networks (22) or to train neural network algorithms (22) taking such harvesting conditions (31) into account. When multiple neural networks (22) are available in the control system (30), it can be provided that the operator can select in the user interface (13) which neural network algorithm (22) will be used within the control system (30).

The harvesting conditions (31) could be determined by the operator, or could also be measured by the sensors (23) such as via a humidity sensor (23) or could even be determined via the network connection (14) as shown in figure 5, such as the weather conditions, it could be possible to locate the harvester (1) via a gps sensor (23), ... When one or more of the harvesting conditions (31) is determined automatically, it can also be possible to automatically select the neural network algorithm (22) based on said automatically determined harvesting condition(s) (31).

## Claims

1. A method for controlling the operation of a root crop harvester (1) for harvesting, which root crop harvester (1) is adjustable with at least one adjustable operating parameter, affecting the harvesting, the method comprising obtaining sensor output data (15, 17) from at least one sensor (11, 23) in the root crop harvester (1), representing at least one state parameter (st) of the root crop harvester (1), and comprising taking operation actions for adjusting the at least one operating parameter in function of the at least one state parameter, **characterised in that** the method comprises receiving the sensor output data (15, 17) in a neural network algorithm (22), provided for generating a suggested operation action (βₜ ) for adjusting the at least one adjustable operating parameter of the root crop harvester (1), in function of the received sensor output data (15, 17), based on operation actions of adjustment of the at least one adjustable operating parameter, by one or more operators in a reference root crop harvester in function of the at least one state parameter and **in that** the method further comprises executing the neural network algorithm (22) for generating the suggested operation action (βₜ ).

2. A method according to claim 1, **characterised in that** for training (25) of the neural network algorithm (22), the method comprises:
- obtaining the sensor output data (15, 17) at multiple times;
- obtaining for each of the times a current operation action (αₜ) of adjustment by an operator of the at least one adjustable operating parameter, in the root crop harvester(1); and
- receiving the obtained sensor output data (15, 17) and current operation actions (αₜ) in the neural network algorithm (22), which neural network algorithm (22) is further provided:
i. for analysing the interrelation between the received sensor output data (15, 17) and the received current operation actions (αₜ); and
ii. for applying the analysed interrelation for generating the suggested operation action (βₜ).

3. A method according to claim 2, **characterised in that** for verification (20) of the neural network algorithm (22) the suggested operation action (βₜ ) is generated for each of the times and that the method comprises verifying for each of the times whether the generated suggested operation action (βₜ) remains within a predetermined offset percentage (γ) of the received current operation action (αₜ) and if for a predetermined number of the times the generated suggested operation action (βₜ) remains for a predetermined amount of the times within the predetermined verification offset percentage (γ), generating a verification signal (21).

4. A method according to any of the preceding claims, **characterised in that** the at least one adjustable operating parameter is adjusted by applying the suggested operation action (βₜ).

5. A method according to any of the preceding claims, **characterised in that** the adjustable operating parameter is only adjustable within a predetermined range.

6. A method according to any of the preceding claims, **characterised in that** the method comprises detecting abnormal deviations in the sensor output data (15, 17) and preventing the detected abnormal deviations being used in generating the suggested operation action (βₜ).

7. A method according to any of the preceding claims, **characterised in that** the neural network algorithm (22) is provided for generating a suggested operation action (βₜ) for the operation of the root crop harvester (1) for a first harvesting condition (31), **in that** one or more additional neural network algorithms (22) are similarly provided for similarly generating a suggested operation action (βₜ) for the operation of the root crop harvester (1) for one or more corresponding additional harvesting conditions (31), differing from the first harvesting condition (31), **in that** the method further comprises obtaining a said harvesting condition (31) and **in that** the neural network algorithm (22) corresponding with the determined harvesting condition (31) is executed for generating the suggested operation condition (βₜ) corresponding with the determined harvesting condition (31).

8. A control system (30) for controlling the operation of a root crop harvester (1) for harvesting, **characterised in that** the control system (30) comprises means for carrying out the method of any of claims 1 to 7.

9. A control system (30) according to claim 8, **characterised in that** the means for carrying out the method comprise an image capturing unit (11) as a said sensor (11,23).

10. A control system (30) according to claim 8 or 9, **characterised in that** the means for carrying out the method comprise one or more local control units (12) on the root crop harvester (1) for executing the neural network algorithm (22).

11. A control system (30) according to any of claims 8 to 10, **characterised in that** the means for carrying out the method comprise several sensors (11, 23) in the root crop harvester (1) for obtaining corresponding sensor output data (15, 17), and comprise a user interface (13) for selecting at least one of the several sensors (11, 23) for obtaining sensor output data (15, 17) for receiving in the neural network algorithm (22).

12. A control system (30) according to claim 11, **characterised in that** the means for carrying out the method are provided for carrying out the method of claim 2 and therefore additionally comprise several action determining means (24) for obtaining corresponding current operation actions (αₜ) .

13. Computer program, comprising instructions, which, when the computer program is executed on a control system (30) according to any of claims 8 to 12, causes the control system (30) to carry out the method of any of claims 1 to 7.

14. Computer-readable data carrier having stored there on the computer program of claim 13.

15. Harvester (1), comprising a control system (30) according to any of claims 8 to 12.
